# EUROPEAN PATENT SPECIFICATION

(11) **EP 2 392 214 B1**
(45) Date of publication and mention of the grant of the patent: **26.04.2017**
(21) Application number: 11168541.8
(22) Date of filing: 01.06.2011
(51) Int. Cl.: A21C 15/00

(54) **Apparatus and metod for filling a bakery product having overlapping layers**
Vorrichtung und Verfahren zum Füllen eines Backprodukts mit überlappenden Schichten
Appareil et procédé pour remplir un produit de boulangerie ayant des couches chevauchantes

(30) Priority: 03.06.2010 IT TO20100463
(43) Date of publication of application: 07.12.2011
(73) Proprietor: SOREMARTEC S.A., 2632 Findel (LU); Ferrero S.p.A., 12051 Alba (Cuneo) (IT)
(72) Inventor: Longo, Marco, 12042 Bra (Cuneo) (IT)
(74) Representative: Rambelli, Paolo

(56) References cited:
- EP-A1- 0 453 586
- EP-A2- 2 123 162
- BE-A- 494 033
- US-A- 3 850 088

## Description

The present invention relates to an automatic or semi-automatic apparatus for filling a bakery product which, in the configuration in which the filling is carried out, is configured with at least two overlapping layers, between which is formed a gap for receiving a filling product.

The invention has been devised with particular regard to the problem of providing an apparatus suitable for the preparation of a product, such as a filled crepe, by carrying out the filling when the crepe has been folded on to itself, once or twice for example, the filling being inserted into the gap between overlapping layers; however, the described apparatus and the corresponding filling method are considered to be equally applicable to bakery products having a structure composed of layers between which is formed a gap for the filling, the layers having open peripheral edges, or to other products which can be folded on to themselves to form one or more pockets with open lips, such as flat breads, pancakes and the like.

The invention also relates to an apparatus adapted to feed a metered quantity of a filling having a high viscosity, for example a cream of the known type marketed under the trademark Nutella®, into a bakery product.

US 3 850 088 A describes a slicing and filling apparatus designed to slice and form sandwich type filled cake or bread products in a continuous manner. The apparatus comprises a pair of complementary vacuum chamber assemblies which exert a suction force on the products fed into a predetermined spacing between the two assemblies. The assemblies have a contoured central portion across their width in which is positioned a nozzle for depositing the filling onto one half of the sliced product. A cutting knife is formed in a continuous loop at the input and positioned between the chambers to slice the products into two halves. Each half of the product is then carried by the suction force acting through a belt mounted to the chamber assemblies in a continuous loop, and one of the sliced halves has a filling deposited thereon and by the joining of the assemblies a filled sandwich type product is formed.

EP 0 453 586 A1 describes a process and device for folding a food piece on a conveyor adapted to advance intermittently; when the conveyor is stationary, the food piece is distributed onto the conveyor so that a half-perimeter of the food piece lies on a folding bar positioned above the conveyor, whose shape conforms to the said half-perimeter of the food piece, the folding bar is rotated 180° to lift up and fold over the half-perimeter so that it lies on the corresponding half-perimeter of the food piece; the folding bar is rotated in the reverse direction and the conveyor is advanced to transport the folded food piece.

EP 2 123 162 A2 describes an apparatus for filling a bakery product such as a bread roll with a constant and reproducible metered volume of a highly viscous filling product.
In this case, the filling product feed means comprise pointed tubular elements which can penetrate into the bakery product. However, this apparatus is not suitable for filling a flat product such as the aforementioned crepe, especially a product which is in a relatively plastic state at the time of filling (being possibly intended to undergo a further baking or browning operation, described below), and in which the layers are consequently liable to adhere to each other.

BE494033 disclosed a filling apparatus for bakery products, whereby the product is charged onto a belt conveyor and horizontally cut by a stationary saw while being moved forward; the upper and lower half are split and a filling is added to the freshly cut surfaces before the two halves are joined again.

One object of the invention is therefore to provide an apparatus for filling products such as the aforementioned crepes.

Another object of the invention is to provide an apparatus which can be conveniently combined with the apparatus described in EP 2 123 162 A2, thus allowing the user to select the bakery product to be filled.

In view of these objects, the invention proposes an apparatus as defined in the claims below, which form an integral part of the present description. The invention also proposes a method of preparing a filled product using the aforesaid apparatus.

Further characteristics of the apparatus according to the invention will be made clear by the following detailed description, which refers to the attached drawings provided by way of non-limiting example, in which:
- Fig. 1 is a functional diagram of the apparatus according to the invention,
- Fig. 2 is a perspective view showing the principal constructional parts of the dispensing and metering structure of the apparatus;
- Figs. 3a and 3b are schematic illustrations of part of the apparatus of Fig. 2 in two successive configurations of the opening means;
- Fig. 4 is a schematic perspective view of a possible configuration of part of the apparatus, and
- Fig. 5 is a front view of the part of the apparatus shown in Fig. 2.

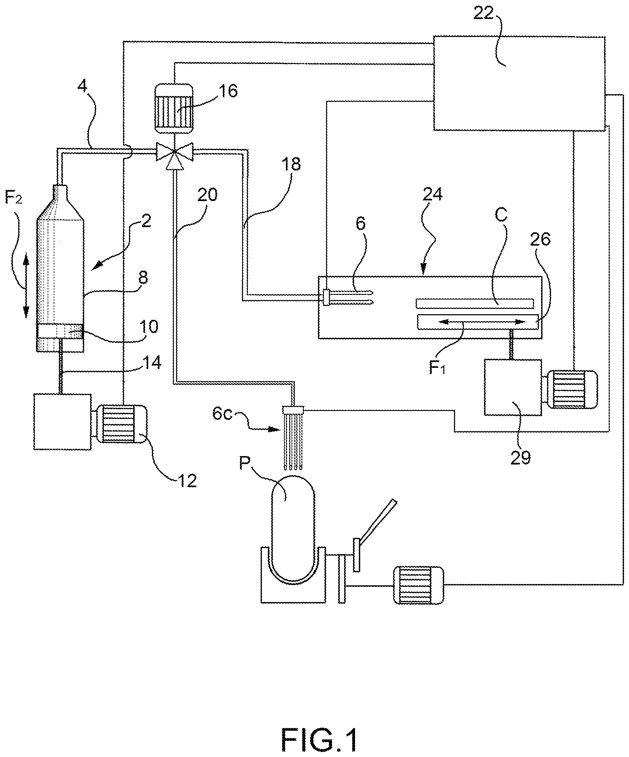

With reference to the functional diagram of Fig. 1, the apparatus comprises a metering unit 2 which preferably has a corresponding or similar structure to that of the metering unit described in EP 2 123 162 A2; this metering unit feeds a metered quantity of a filling product through a conduit 4 to dispensing means indicated by 6.

The metering unit therefore comprises a cylinder 8 with a piston 10 driven by drive means 12. Preferably, the drive means 12 are composed of a stepping motor which rotates a threaded rod 14 of the piston so as to cause its axial movement in both directions indicated by the arrow F₂; it is not essential, although it may be preferable, to control the speed of movement of the piston in order to provide a constant flow rate to the dispensing means 6, since the uniform distribution of the filling product within the bakery product can be achieved in a pressing step as described below.

A metering valve 16, preferably in the form of a servo-controlled valve, is interposed in the conduit 4.

In an exemplary embodiment, the valve 16 can be a three-way valve which allows the filling product to be fed through the conduit 18 to the dispensing means 6, and also allows the filling product to be fed selectively through the conduit 20 to dispensing means 6c adapted for filling a bread roll P or the like, in the manner described in EP 2 123 162 A2; a monitoring and control unit 22, connected to a user-operable selector (not shown) can be set to cause the filling to be dispensed selectively to the conduit 18 or to the conduit 20, thus enabling the user to select the type of product to be filled.

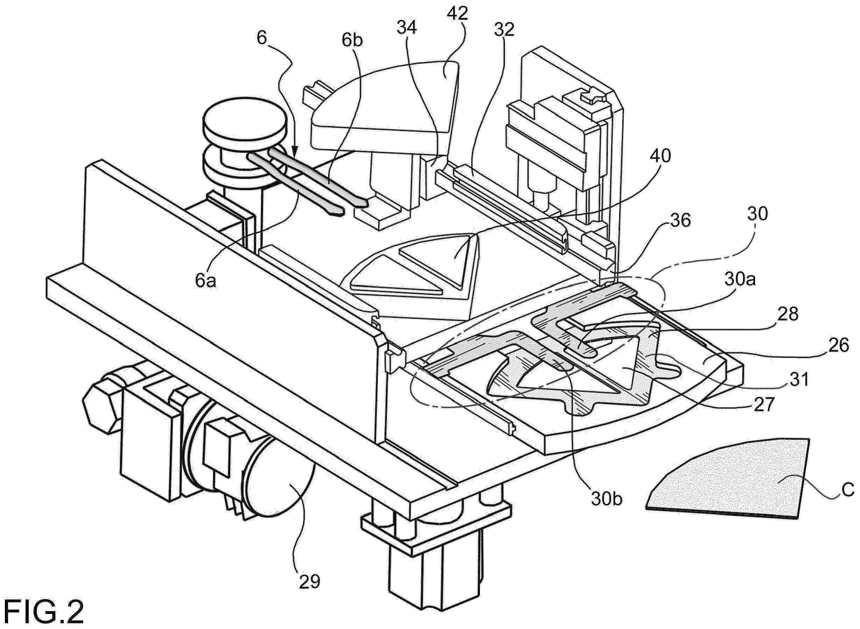

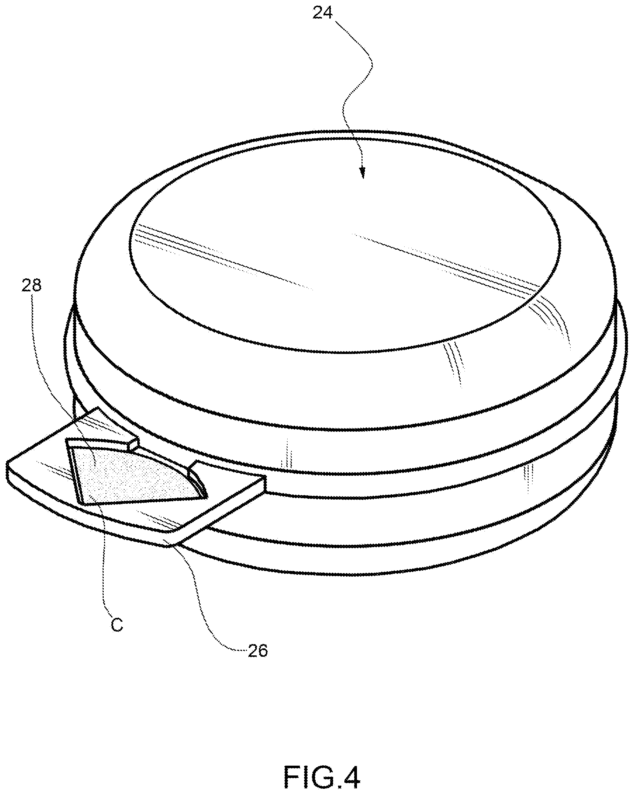

The apparatus according to the invention may comprise a protective casing 24 (Fig. 4) with a movable support member 26 in the form of a drawer provided with a receiving seat 28 for the product C to be filled. The receiving seat 28 preferably has an aperture 27 (Fig. 2) and an annular ledge 31 which supports the product.

As mentioned previously, this product is preferably a crepe folded on to itself once or twice to form one or more pockets for receiving the filling; the example shows a circular crepe folded on to itself twice so as to assume the shape of a sector of a circle.

This shape is provided for information only, and clearly a rectangular or square shape is also possible.

The casing 24 also houses the dispensing means 6, formed for example by one or more tubular elements 6a, 6b, which preferably have flattened ends to form flattened dispensing nozzles or mouths.

The support member 26 and the dispensing means 6 can be moved relative to each other, preferably in a horizontal direction, as indicated by the double arrow F₁. In particular, in the illustrated embodiment, the dispensing means 6 are fixed and the support member 26 is movable horizontally, being driven by drive means 29.

The relative movement takes place between a first position in which the support member 26 and the dispensing means 6 are spaced apart, with the support member 26 outside the casing 24, so as to allow the product C to be positioned in the receiving seat 28, and a second position in which the dispensing means have penetrated into the product C (the filling position).

According to one feature of the invention, the apparatus comprises opening means 30 designed to spread apart the edges of the layers of the product which form the filling gap or cavity, following the relative approaching movement between the support member 26 and the dispensing means 6, between the loading position of the product C and the filling position, thus allowing the dispensing means to penetrate into the gap formed by the overlapping layers.

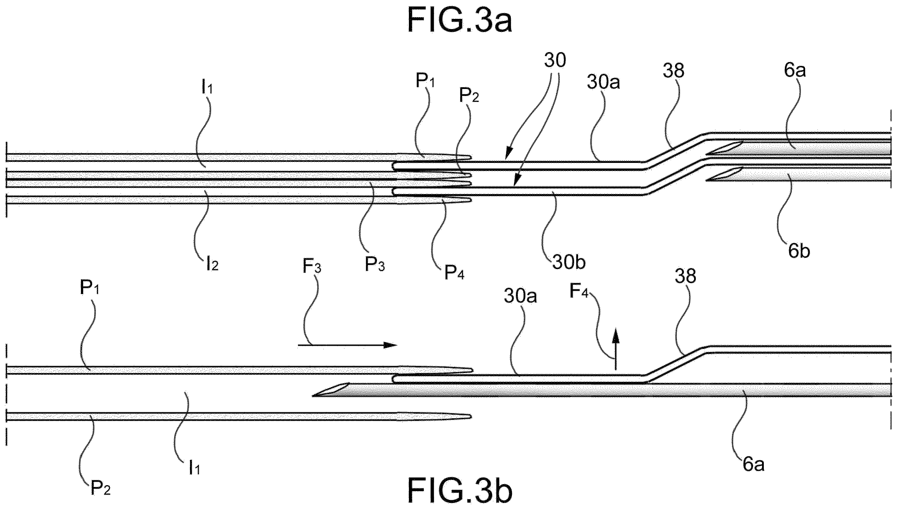

The aforesaid opening means 30, associated for operation with the support member 26, comprise one or more flexible strip elements 30a, 30b; in particular, the number of strip elements 30a, 30b is equal to the number of gaps to be filled in the product C; in the illustrated case, there are two adjacent strip elements 30a, 30b, positioned on planes offset from each other, each element being designed to penetrate, respectively, between the layers P₁, P₂ and P₃, P₄ which form the filling gaps I₁ and I₂ (see Fig. 3a).

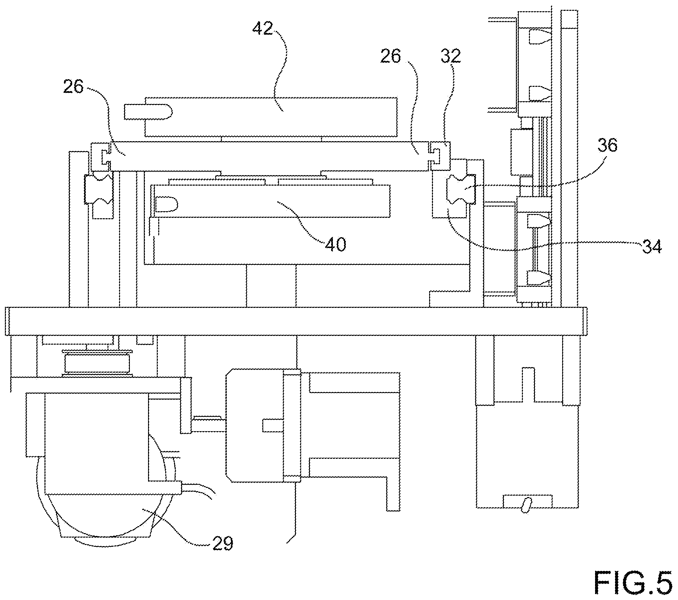

Preferably, as shown in Fig. 5, the support member 26 is mounted slidably on a pair of guides 32 and the opening members in the form of strips 30a, 30b are associated for operation with the support member 26, being attached to the guides 32, which in turn are fixed to a second pair of guides 34 which are slidable on stationary guides 36.

The flexible strip opening members have at least one ramp or inclined plane section 38 and are positioned in such a way that the relative approaching movement between the support member 26 in which the product C is housed and the dispensing means 6, in the direction indicated by the arrow F₃ (Fig. 3b), can cause interference between the aforesaid ramp section 38 and the end of the dispensing means such that the dispensing means impart a force to the ramp section and cause the opening strip elements to move in a direction orthogonal to the plane of advance, as shown by the arrow F₄, simultaneously causing the layers P₁, P₂, and P₃, P₄ respectively to be spread apart, thus increasing the volume of the gap I₁ and I₂.

In the initial position, the support member 26 is in the extracted position spaced apart from the dispensing means, in a position outside the containing casing, thus allowing the product C to be loaded into the receiving seat 28. In this position, the opening strip members 30a, 30b fastened to the guides 32 are in the extracted position or can be moved to the extracted position by the operator, and their ends pointing towards the product can be inserted manually between the edges of the layers P₁, P₂ and P₃, P₄ of the product C.

The translation of the support member 26, which is driven by the drive means 29 in an approaching movement towards the dispensing means 6, causes the guides 32 and the opening members associated with them to be drawn along, and the assembly of all these elements is subjected to a translational movement because of the presence of the guides 34 which are slidable on the guides 36.

As a result of the interference between the strip members 30a, 30b with the dispensing means 6, the layers forming the gaps I₁ and I₂ are progressively opened and spread apart. When the dispensing members 6 have penetrated to a position near the end of their respective gap, the monitoring and control unit 22 receives a limit signal and consequently causes the filling product to be dispensed.

After the activation of the means for dispensing the filling product, the drive means 29 are set to cause a relative movement of the support member 26 away from the dispensing means 6, from the filling position, during the dispensing of the filling product in the product C.

The drive means 29 are preferably capable of causing the support member 26 and the product C associated with it to move at a constant speed or possibly according to a mode of movement which can be specified by the operator.

In a preferred embodiment, the apparatus also comprises means for compressing and/or heating the filled product. These means are indicated in Fig. 2 by the reference numerals 40 and 42, and comprise a support plate 40 and a counter-plate 42 which can be moved relative to each other in a direction orthogonal to the plane in which the support member 26 can slide. In particular, the support plate 40 can be fixed and the counter-plate 42 can be vertically movable.

These compression means 40 and 42 are designed to cause a compression of the filled bakery product, so as to provide a uniform distribution of the filling product over the internal surface of the gaps between the layers of the product. Preferably, one or both of the plates 40 and 42 are also provided with heating means for the further baking and/or browning of the bakery product.

In the course of the movement of the support member 26 away from the dispensing means 6, when the dispensing means 6 have been completely extracted from the bakery product, the support member 26 is designed to stop at the position of the aforesaid compression means, so as to position the product C supported by them between the plates 40 and 42. In this position, the aforesaid operation of compression and/or further baking or browning can be carried out.

At the end of this operation, the support member 26 is driven again by the drive means 29 until it reaches the loading position, outside the casing 24, to allow the user to retrieve the filled product C.

As mentioned above, the monitoring and control unit 22 is designed to control the operating cycle of the filling apparatus in an automatic or semi-automatic way, and also allows the user to input and select the operating parameters.

In particular, the monitoring and control unit can be designed to control:
- the quantity of filling product supplied in each metered feed, which naturally varies as a function of the dimensions of the product C;
- the dispensing time of the metered quantity, by setting the speed of rotation of the threaded rod 14 driven by the motor 12;
- the speed of the movement of the support member 26 away from the position at which filling starts, during the metered feeding of the filling product;
- the activation of the compression/heating means 42, 40, particularly for the purpose of selecting the compression operation only and/or the operation of compression and heating (baking or browning);
- the time and temperature of further baking and/or browning.

The scope of the invention also includes an apparatus for the simultaneous or sequential filling of a plurality of products C, including a corresponding plurality of metering means and dispensing means, each operating with a respective support member for the product C.

The apparatus according to the invention can also be configured as a coin- or token-operated apparatus and/or can be provided with selector means allowing the user to select specific parameters of the filling, such as the type of cream and the quantity of the filling product, as well as the times and temperatures of any further baking as mentioned above.

The filling method which can be applied by using the apparatus described above is also defined by the claims below. This method differs from the conventional method of preparing a crepe or the like, in which the filling is generally applied to the face of the product which is then folded on to itself, in that the conventional steps are reversed; in other words, the product is initially folded on to itself to form a structure with overlapping layers, followed by the metered feeding of the filling product into the layers; the method allows the control of the metered feeding of the intermediate product forming the filling, and provides uniform distribution of the filling product in the layers, by means of a compression operation following the filling.

Owing to these distinctive features of the method, which can be implemented conveniently because of the use of the opening means described above, metered feeding of the filling is possible, and a further baking and/or browning operation can be carried out on the bakery product, simultaneously with the compression operation or immediately thereafter, thus enabling the user to set the degree of baking at the desired level and to retrieve a hot filled product, ready for consumption, from the apparatus.

## Claims

1. Apparatus for filling a folded bakery product, which product is folded over so as to form at least two layers (P₁, P₂; P₃, P₄) which are at least partially overlapping, between which a gap (I₁, I₂) is formed for receiving a filling product, comprising:
- a support member (26) having a receiving seat (28) for supporting the product (C) to be filled;
- dispensing means (6) designed to penetrate into the product (C) and dispense a filling product into it;
- drive means (29) adapted to cause a relative movement between the support member (26) and the dispensing means (6) between a position in which the product (C) is loaded on to the support member (26) and a filling position in which the dispensing means (6) are made to penetrate into the product (C); and
- metering means (2) for supplying a predetermined quantity of filling to the dispensing means (6),
wherein the apparatus further comprises opening means (30) designed to spread apart the edges of the layers (P₁, P₂; P₃, P₄) as a result of the relative approaching movement between the support member (26) and the dispensing means (6) between the loading position of the product (C) and the filling position, so as to allow the penetration of the dispensing means (6) into the gap (I₁, I₂) formed between the overlapping layers (P₁, P₂; P₃, P₄), the opening means (30) comprising one or more members of the flexible strip type (30a, 30b), which can be inserted between the edges of the layers (P₁, P₂, P₃, P₄) and can interact with the dispensing means (6) in such a way that the relative approaching movement between the product (C) and the dispensing means (6) causes a movement of the ends of the opening means (30) such that the edges of the layers (P₁, P₂; P₃, P₄) are spread apart and the dispensing means (6) can penetrate into the gap (I₁, I₂) between the layers (P₁, P₂; P₃, P₄).

2. Apparatus according to Claim 1, **characterised in that** the opening means (30) are movable between an extracted position, in which they can be inserted between the edges of the layers (P₁, P₂; P₃, P₄) of the product (C) in the loading position of the bakery product, and a position retracted from said extracted position.

3. Apparatus according to Claim 1 or 2, **characterised in that** said opening means of the flexible strip type (30) comprise at least one inclined plane or ramp section (38), and are positioned in relation to the dispensing means (6) in such a way that, in the course of the relative approaching movement between the opening means (30) and the dispensing means (6), the end of the dispensing means (6) pointing towards the opening means (30) interferes with the ramp section (38) to cause the opening means (30) inserted in the gap (I₁, I₂) to undergo elastic deformation in a direction orthogonal to the plane of the approaching movement, thus causing the layers (P₁, P₂; P₃, P₄) to be spread apart.

4. Apparatus according to any one of Claims 1 to 3, **characterised in that** the opening means (30) are associated with the support member (26) in such a way that the relative approaching movement between the support member (26) and the dispensing means (6) causes the opening means (30) to be translated towards the dispensing means (6).

5. Apparatus according to any one of Claims 1 to 4, **characterised in that** it also comprises compression and/or heating means (40, 42) designed to exert a pressure on the product (C), after the filling, to create a uniform distribution of the filling product.

6. Apparatus according to Claim 5, **characterised in that** the compression means (40, 42) additionally comprise heating elements adapted to cause further baking and/or browning of the filled product (C).

7. Apparatus according to Claim 5 or 6, **characterised in that** the compression means comprise a first (40) and a second (42) plate, said plates being movable relative to each other in a direction orthogonal to the plane of movement of the support member (26).

8. Apparatus according to any one of the preceding claims, **characterised in that** the metering means (2) comprise cylinder (8) and piston (10) means, the piston (10) having a threaded rod (14) rotated by a stepper motor (12).

9. Apparatus according to any one of the preceding claims, additionally comprising second dispensing means (6a) for filling a bread roll or the like, and selector means (16, 22) designed to cause the filling product to be fed selectively to the dispensing means (6a) for filling a bread roll or to the dispensing means (6) for filling the layered bakery product (C).

10. Method for preparing a filled product (C) comprising providing a folded bakery product, said product being folded over so as to form at least two layers (P₁, P₂; P₃, P₄) between which is formed a gap (I₁, I₂) intended to receive a filling product, comprising the operations of inserting dispensing means (6) between the layers and dispensing the filling product into the gap formed between the layers, the dispensing means and the product to be filled being subjected to a relative movement away from each other which causes the dispensing means to be extracted from the gap, **characterised in that** the method comprises the operation of causing the layers to be spread apart by means of opening means (30), comprising one or more members of the flexible strip type (30a, 30b) adapted to cause the layers to be spread apart, in order to allow the dispensing means (6) to be inserted in the course of the relative approaching movement between the dispensing means and the product to be filled.

11. Method according to Claim 10, **characterised in that** it comprises the operation of compressing the filled product, in order to improve the uniformity of the distribution of the filling product, at the end of the filling operation.

12. Method according to Claim 10 or 11, **characterised in that** it comprises the operation of heating and/or browning or baking the filled product simultaneously with, or following, the compression operation.

13. Method according to any one of Claims 10 to 12, in which the product to be filled is a crepe or the like, **characterised in that** it comprises the operation of folding the product on to itself more times, in order to form a plurality of gaps for receiving the filling, before the filling operation.

14. Use of an apparatus according to any one of Claims 1 to 9, for filling a product such as a crepe or the like, where the product is folded on to itself one or more times before the filling operation.

## Patentansprüche

1. Vorrichtung zum Füllen einer gefalteten Backware, wobei die Ware umgefaltet wird, um zumindest zwei Schichten (P1, P2; P3, P4) zu bilden, die zumindest teilweise einander überlappen und zwischen denen ein Spalt (I1, I2) für die Aufnahme einer Füllung gebildete ist, umfassend:
- ein Tragelement (26) mit einem Aufnahmesitz (28) zum Tragen der zu füllenden Ware (C);
- eine Abgabeeinrichtung (6), die dazu eingerichtet ist, in die Ware (C) einzudringen und eine Füllung in diese abzugeben;
- eine Antriebseinrichtung (29), die dazu angepasst ist, eine Relativbewegung zwischen dem Tragelement (26) und der Abgabeeinrichtung (6) zwischen einer Position, in der das Produkt (C) auf das Tagelement geladen wird, und einer Befüllposition, in der die Abgabeeinrichtung (6) dazu gebracht wird, in die Ware (C) einzudringen; und
- eine Dosiereinrichtung (2) zum Zuführen einer voreingestellten Menge der Füllung zu der Abgabeeinrichtung (6), wobei die Vorrichtung ferner eine Öffnungseinrichtung (30) umfasst, die dazu eingerichtet ist, die Ränder der Schichten (P1, P2; P3, P4) auseinander zu spreizen, als Ergebnis einer relativen Annäherungsbewegung zwischen dem Tragelement (26) und der Abgabeeinrichtung (6) zwischen der Ladeposition des Produkts (C) und der Füllposition, um so das Eindringen der Abgabeeinrichtung (6) in den Spalt (I1, I2), der zwischen den überlappenden Schichten (P1, P2; P3, P4) gebildet ist, zu ermöglichen; die Öffnungseinrichtung (30) ein oder mehrere flexible streifenartige Elemente (30) umfasst, die zwischen den Rändern der Lagen (P1, P2; P3, P4) eingeführt werden können und derart mit der Abgabeeinrichtung (6) interagieren können, dass die relative Annäherungsbewegung zwischen der Ware (C) und der Abgabeeinrichtung (6) eine Bewegung von Enden der Öffnungseinrichtung (30) bewirkt, sodass die Ränder der Schichten (P1, P2; P3, P4) auseinandergespreizt werden, und die Abgabeeinrichtung (6) in den Spalt (I1, I2) zwischen den Schichten (P1, P2; P3, P4) eindringen kann.

2. Vorrichtung nach Anspruch 1, **dadurch gekennzeichnet, dass** die Öffnungseinrichtung (30) zwischen einer ausgezogenen Position, in der sie zwischen den Rändern der Schichten (P1, P2; P3, P4) der Ware (C), in der Ladeposition der Ware, eingeführt werden kann, und einer Position, die von der genannten Position zurückgezogen ist, bewegbar ist.

3. Vorrichtung nach Anspruch 1 oder Anspruch 2, **dadurch gekennzeichnet, dass** die flexible streifenartige Öffnungseinrichtung (30) zumindest eine geneigte Ebene oder Rampenabschnitt (38) umfasst, und in Bezug auf die Abgabeeinrichtung (6) derart angeordnet ist, dass im Verlauf der relativen Annäherungsbewegung zwischen der Öffnungseinrichtung (30) und der Abgabeeinrichtung (6), das Ende der Abgabevorrichtung (6), das in Richtung der Öffnungseinrichtung (30) zeigt, mit dem Rampenabschnitt (38) interferiert, um zu bewirken, dass die Öffnungseinrichtung (30), die in den Spalt (I1, I2) eingeführt ist, sich einer elastische Deformation in einer Richtung, die orthogonal zu der Ebene der Annäherungsbewegung ist, zu unterziehen, wodurch die Schichten (P1, P2; P3, P4) auseinandergespreizt werden.

4. Vorrichtung nach einem der Ansprüche 1 bis 3, **dadurch gekennzeichnet, dass** die Öffnungseinrichtung (30) mit dem Tragelement (26) derart in Verbindung steht, dass die relative Annäherungsbewegung zwischen dem Tragelement (26) und der Abgabeeinrichtung (6) bewirkt, dass die Öffnungseinrichtung (30) in Richtung der Abgabeeinrichtung (6) bewegt wird.

5. Vorrichtung nach einem der Ansprüche 1 bis 4, **dadurch gekennzeichnet, dass** sie außerdem eine Druck- und/oder Heizeinrichtung (40, 42) umfasst, die dazu eingerichtet ist/sind, nach dem Füllen einen Druck auf die Ware (C) auszuüben, um eine gleichmäßige Verteilung der Füllung zu schaffen.

6. Vorrichtung nach Anspruch 5, **dadurch gekennzeichnet, dass** die Druckeinrichtung (40, 42) zusätzlich Heizelemente umfasst, die dazu angepasst sind, ein weiteres Backen und/oder Bräunen der befüllten Ware (C) zu bewirken.

7. Vorrichtung nach Anspruch 5 oder 6, **dadurch gekennzeichnet, dass** die Druckeinrichtung eine erste Platte (40) und eine zweite Platte (42) umfasst, wobei die Platten in einer Richtung senkrecht zu der Bewegungsebene des Tragelements (26) relativ zueinander beweglich sind.

8. Vorrichtung nach einem der vorhergehenden Ansprüche, **dadurch gekennzeichnet, dass** die Dosiereinrichtung (2) einen Zylinder (8) und einen Kolben (10) umfasst, wobei der Kolben (10) eine Gewindestange (14) aufweist, die durch einen Schrittmotor (12) gedreht wird.

9. Vorrichtung nach einem der vorhergehenden Ansprüche, zusätzlich umfassend eine zweite Dosiereinrichtung (6a) zum Füllen eines Brötchen oder dergleichen, und eine Auswahleinrichtung (16, 22), die dazu eingerichtet ist zu bewirken, dass die Füllung selektiv zu der Abgabeeinrichtung (6a), um eine Brötchen zu füllen, oder zu der Abgabeeinrichtung (6), um die geschichtete Ware (C) zu füllen, zugeführt wird.

10. Verfahren zur Zubereitung einer befüllten Ware (C), umfassend das Bereitstellen einer gefalteten Backware, wobei die Ware gefaltet ist, um mindestens zwei Schichten (P1, P2; P3, P4) zu bilden, zwischen denen ein Spalt (I1, I2) gebildet ist, der dazu bestimmt ist, eine Füllung aufzunehmen, umfassend die Vorgänge des Einführens einer Abgabeeinrichtung (6) zwischen den Schichten und Abgeben der Füllung in den Spalt, der durch die Schichten gebildet ist, wobei die Abgabeeinrichtung und die zu befüllende Ware einer Relativbewegung, voneinander weg, unterzogen werden, die bewirkt, dass die Abgabeeinrichtung aus der Ware herausgezogen wird,
**dadurch gekennzeichnet, dass** das Verfahren den Vorgang des Auseinanderspreizens der Schichten durch eine Öffnungseinrichtung (30) umfasst, die eine oder mehrere flexible streifenförmige Element (30a, 30b) umfasst, die dazu angepasst sind, zu bewirken, dass die Schichten auseinandergespreizt werden, um es der Abgabeeinrichtung (6) zu ermöglichen, im Verlauf einer relativen Annäherungsbewegung zwischen der Abgabeeinrichtung und der zu befüllenden Ware eingeführt zu werden.

11. Verfahren nach Anspruch 10, **dadurch gekennzeichnet, dass** es am Ende des Füllvorganges den Vorgang des Verdichtens der befüllten Ware umfasst, um die Gleichmäßigkeit der Verteilung der Füllung zu verbessern,.

12. Verfahren nach Anspruch 10 oder 11, **dadurch gekennzeichnet, dass** es gleichzeitig mit oder im Anschluss an den Verdichtungsvorgang den Vorgang des Heizens und/oder Bräunens oder Backens der befüllten Ware umfasst.

13. Verfahren nach einem der Ansprüche 10 bis 12, in dem die zu befüllende Ware ein Krepp oder dergleichen ist, **dadurch gekennzeichnet, dass** es vor dem Füllvorgang den Vorgang des Faltens der Ware, mehrmals auf sich selbst, umfasst, um mehrere Spalte für die Aufnahme der Füllung zu bilden.

14. Verwendung einer Vorrichtung nach einem der Ansprüche 1 bis 9, zum Füllen einer Ware wie ein Krepp oder dergleichen, wobei die Ware vor dem Füllvorgang einmal oder mehrmals auf sich selbst gefaltet wird.

## Revendications

1. Appareil de remplissage d'un produit de boulangerie plié, lequel produit est plié de sorte à former au moins deux couches (P₁, P₂ ; P₃, P₄) qui se chevauchent au moins en partie, entre lesquelles une fente (I₁, I₂) est formée pour recevoir un produit de remplissage, comprenant :
- un élément de support (26) présentant un siège de réception (28) pour supporter le produit (C) à remplir ;
- des moyens de distribution (6) conçus pour pénétrer dans le produit (C) et distribuer un produit de remplissage en lui ;
- des moyens d'entraînement (29) adaptés pour provoquer un mouvement relatif entre l'élément de support (26) et les moyens de distribution (6) entre une position, dans laquelle le produit (C) est chargé sur l'élément de support (26), et une position de remplissage, dans laquelle les moyens de distribution (6) sont amenés à pénétrer dans le produit (C) ; et
- des moyens de mesure (2) pour fournir une quantité de produit de remplissage prédéterminée aux moyens de distribution (6),
dans lequel l'appareil comprend en outre des moyens d'ouverture (30) conçus pour s'écarter des arêtes des couches (P₁, P₂ ; P₃, P₄) suite au mouvement d'approche relatif entre l'élément de support (26) et les moyens de distribution (6) entre la position de chargement du produit (C) et la position de remplissage, de sorte à permettre la pénétration des moyens de distribution (6) dans la fente (I₁, I₂) formée entre les couches chevauchantes (P₁, P₂ ; P₃, P₄), les moyens d'ouverture (30) comprenant un ou plusieurs éléments du type bande flexible (30a, 30b) qui peuvent être insérés entre les arêtes des couches (P₁, P₂, P₃, P₄) et peuvent interagir avec les moyens de distribution (6) de telle manière que le mouvement d'approche relatif entre le produit (C) et les moyens de distribution (6) provoque un mouvement des extrémités des moyens d'ouverture (30) de sorte que les arêtes des couches (P₁, P₂ ; P₃, P₄) soient écartées et les moyens de distribution (6) puissent pénétrer dans la fente (I₁, I₂) entre les couches (P₁, P₂ ; P₃, P₄).

2. Appareil selon la revendication 1, **caractérisé en ce que** les moyens d'ouverture (30) sont mobiles entre une position extraite, dans laquelle ils peuvent être insérés entre les arêtes des couches (P₁, P₂ ; P₃, P₄) du produit (C) dans la position de chargement du produit de boulangerie, et une position rétractée de ladite position extraite.

3. Appareil selon la revendication 1 ou 2, **caractérisé en ce que** lesdits moyens d'ouverture du type bande flexible (30) comprennent au moins un plan incliné ou une section de rampe (38), et sont positionnés par rapport aux moyens de distribution (6) de telle manière qu'au cours du mouvement d'approche relatif entre les moyens d'ouverture (30) et les moyens de distribution (6), l'extrémité des moyens de distribution (6) pointant vers les moyens d'ouverture (30) interfère avec la section de rampe (38) pour amener les moyens d'ouverture (30) insérés dans la fente (I₁, I₂) à subir une déformation élastique dans une direction orthogonale au plan du mouvement d'approche, amenant ainsi les couches (P₁, P₂ ; P₃, P₄) à s'écarter.

4. Appareil selon l'une quelconque des revendications 1 à 3, **caractérisé en ce que** les moyens d'ouverture (30) sont associés à l'élément de support (26) de telle manière que le mouvement d'approche relatif entre l'élément de support (26) et les moyens de distribution (6) amène les moyens d'ouverture (30) à translater vers les moyens de distribution (6).

5. Appareil selon l'une quelconque des revendications 1 à 4, **caractérisé en ce qu'**il comprend aussi des moyens de compression et/ou de chauffage (40, 42) conçus pour exercer une pression sur le produit (C) après le remplissage pour créer une distribution uniforme du produit de remplissage.

6. Appareil selon la revendication 5, **caractérisé en ce que** les moyens de compression (40, 42) comprennent en outre des éléments chauffants adaptés pour provoquer en outre la cuisson et/ou le brunissement du produit rempli (C).

7. Appareil selon la revendication 5 ou 6, **caractérisé en ce que** les moyens de compression comprennent une première (40) et une seconde (42) plaque, lesdites plaques étant mobiles l'une par rapport à l'autre dans une direction orthogonale au plan de mouvement de l'élément de support (26).

8. Appareil selon l'une quelconque des revendications précédentes, **caractérisé en ce que** les moyens de mesure (2) comprennent des moyens à cylindre (8) et piston (10), le piston (10) présentant une tige filetée (14) tournée par un moteur pas à pas (12).

9. Appareil selon l'une quelconque des revendications précédentes, comprenant en outre des seconds moyens de distribution (6a) pour le remplissage d'un petit pain ou similaire, et des moyens de sélection (16, 22) conçus pour amener le produit de remplissage à être conduit sélectivement aux moyens de distribution (6a) pour le remplissage d'un petit pain ou aux moyens de distribution (6) pour le remplissage du produit de boulangerie en couches (C).

10. Procédé de préparation d'un produit rempli (C) comprenant la fourniture d'un produit de boulangerie plié, ledit produit étant plié de sorte à former au moins deux couches (P₁, P₂ ; P₃, P₄), entre lesquelles est formée une fente (I₁, I₂) destinée à recevoir un produit de remplissage, comprenant les opérations d'insertion des moyens de distribution (6) entre les couches et de distribution du produit de remplissage dans la fente formée entre les couches, les moyens de distribution et le produit à remplir étant soumis à un mouvement relatif d'éloignement les uns de l'autre qui amène les moyens de distribution à être extraits de la fente, **caractérisé en ce que** le procédé comprend l'opération d'amener les couches à s'écarter à l'aide de moyens d'ouverture (30), comprenant un ou plusieurs éléments du type bande flexible (30a, 30b) adaptés pour amener les couches à s'écarter, afin de permettre aux moyens de distribution (6) d'être insérés au cours du mouvement d'approche relatif entre les moyens de distribution et le produit à remplir.

11. Procédé selon la revendication 10, **caractérisé en ce qu'**il comprend l'opération de compression du produit rempli afin d'améliorer l'uniformité de la distribution du produit de remplissage à la fin de l'opération de remplissage.

12. Procédé selon la revendication 10 ou 11, **caractérisé en ce qu'**il comprend l'opération de chauffage et/ou de brunissement ou de cuisson du produit rempli simultanément à ou suivant l'opération de compression.

13. Procédé selon l'une quelconque des revendications 10 à 12, dans lequel le produit à remplir est une crêpe ou similaire, **caractérisé en ce qu'**il comprend l'opération de pliage du produit sur lui-même plusieurs fois afin de former une pluralité de fentes pour recevoir le remplissage avant l'opération de remplissage.

14. Utilisation d'un appareil selon l'une quelconque des revendications 1 à 9, pour le remplissage d'un produit tel qu'une crêpe ou similaire, où le produit est plié sur lui-même une ou plusieurs fois avant l'opération de remplissage.
